# EUROPEAN PATENT APPLICATION

(11) **EP 4 718 306 A1**
(43) Date of publication of application: **01.04.2026**
(21) Application number: 24203201.9
(22) Date of filing: 27.09.2024
(51) Int. Cl.: G06F 21/75

(54) **GLITCH DETECTOR**

(71) Applicant: NXP B.V., 5656 AG Eindhoven (NL)
(72) Inventor: VESHCHIKOV, Nikita, 3001 Leuven (BE); BECKERS, Arthur, 3001 Leuven (BE)
(74) Representative: Colaiuda, Antonella

(57) **Abstract**

The disclosure relates to voltage glitch detection in an integrated circuit for detection of fault injection attacks. Example embodiments include an integrated circuit (411) comprising: a hardware accelerator (412) including a computing module (413₁, 413₂) configured to perform a computing function; and a glitch detector (416₁, 416₂) including a delay function (413₁, 413₂) and a comparator (419₁, 419₂) arranged to compare an output from the delay function (413₁, 413₂) with an expected result to provide an output for detecting a glitch, wherein the delay function (413₁, 413₂) of the glitch detector (416₁, 416₂) is provided at least in part by the computing function of the computing module (413₁, 413₂) in the hardware accelerator (412).

## Description

### Field

The disclosure relates to glitch detection in an integrated circuit for detection of fault injection attacks.

### Background

Fault injection (FI) attacks may be used to bypass security mechanisms of secure devices such as microcontrollers for smart cards, for example in attempts to extract secrets such as passwords and decryption keys. Glitch detectors can be used to detect such attacks by detecting short timescale variations in a voltage supply that may signify an FI attack.

A fault can be injected by various methods, the most common being clock or voltage glitching, electromagnetic fault injection and laser fault injection. A subset of these methods induces faults into a chip by introducing critical path violations. These particular faults can be detected by glitch detectors. If a fault is detected then a secure operation can be restarted or some special functionality of a chip can be enabled, for example the chip may enter a special safe mode or can be rebooted. Glitch detectors may also be termed fault detectors or fault sensors.

An integrated circuit on a single chip may comprise multiple glitch detectors. Each glitch detector uses some resources of the chip, including energy, transistors and wiring (i.e. physical space). Physical space is always required, while energy may only be required when a glitch detector is enabled or active. Usually a single chip will have many glitch detectors, which may take up a considerable amount of resources of the system.

### Summary

According to a first aspect there is provided an integrated circuit comprising: a hardware accelerator including a computing module configured to perform a computing function; and a glitch detector including a delay function and a comparator arranged to compare an output from the delay function with an expected result to provide an output for detecting a glitch, wherein the delay function of the glitch detector is provided at least in part by the computing function of the computing module in the hardware accelerator.

The output from the delay function may be a delay or a computed result.

The computing function may be one of a Fourier transform, an inverse Fourier transform, a cryptographic operation, a digital signal processing operation and a floating point operation.

The glitch detector may comprise a configuration module provided at least in part by the hardware accelerator.

The glitch detector may be configured to provide a plurality of different inputs to the delay function.

The glitch detector may comprise a further delay function, the glitch detector configured to provide an input to the further delay function in series with the computing module to provide the output from the delay function to the comparator.

The further delay function may comprise a series arrangement of a plurality of alternating logic NOT gates and registers.

The computing module may be one of a plurality of computing modules and the glitch detector one of a plurality of glitch detectors, the delay function of each glitch detector being provided at least in part by a respective one of the computing modules of the hardware accelerator.

According to a second aspect there is provided a method of performing glitch detection in an integrated circuit comprising: a hardware accelerator including a computing module configured to perform a computing function; and a glitch detector including a delay function and a comparator arranged to compare an output from the delay function with an expected result to provide an output for detecting a glitch, the method comprising: while the integrated circuit is performing a security operation, operating the glitch detector with the delay function of the glitch detector being provided at least in part by the computing module of the hardware accelerator.

The output of the comparator may indicate detection of a supply voltage or clock frequency glitch if the output from the delay function does not match the expected result.

The output from the delay function may be a delay or a computed result.

The security operation may be one or more of a secure boot phase, an encryption operation, an authentication operation, an operation for verification of access rights, an operation to access secure memory and a signature verification operation.

The method may comprise disabling the glitch detector while the integrated circuit is not performing a security operation.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic representation of a generic glitch detector;
Figure 2 is a schematic representation of a generic hardware accelerator;
Figure 3 is a schematic representation of four glitch detectors with different functions in place of a delay function;
Figure 4a is a schematic representation of a current arrangement of a hardware accelerator and separate glitch detector; and
Figure 4b is a schematic representation of an arrangement of a hardware accelerator and two glitch detectors according to the present disclosure, in which certain functions are shared between the hardware accelerator and the glitch detectors;
Figure 5 is a schematic representation of a glitch detector with a computing delay function extended with a short delay to achieve a longer critical path;
Figure 6 is a schematic representation of a NOT gate implementation of the short delay of Figure 5; and
Figure 7 is a schematic flow diagram illustrating an example method of operating an IC with a glitch detector.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

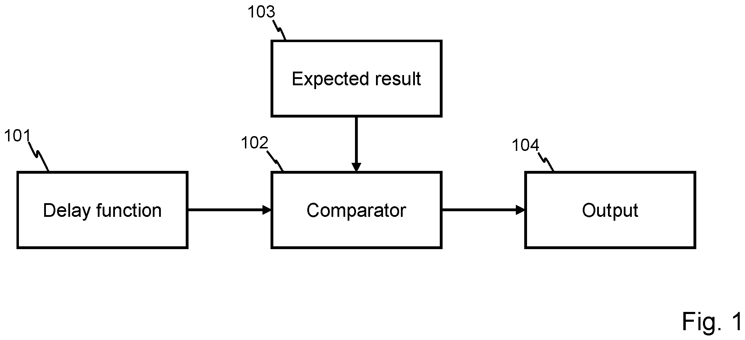

Figure 1 illustrates schematically a standard approach that is used in current glitch detectors. A delay function 101 is used, this delay function being well known and characterized or tuned. When the delay function 101 is running in a normal mode (i.e. with no glitches and no FI attacks), the time delay and output of the delay function 101 is known and therefore predictable. Thus, when the result is compared to an expected result 103 by a comparator 102, there should be no mismatch, which is indicated by the output 104 from the comparator 102.

When a glitch is injected by an attacker, a critical path violation will occur that results in a mismatch between the expected result 103 and the actual result from the delay function 101. The output 104 from the comparator 102 should then indicate that an exception is raised. This exception would usually handle the case when the device is under FI attack, which may cause secret keys to be erased or the device to be set to a special safe mode. The expected result 103 can be a value that is computed by the delay function or may for example be the time that the delay function 101 took to compute the result. This procedure is typically executed indefinitely in a loop while the device is operational, implemented using a dedicated piece of hardware on the chip. Multiple such glitch detectors can be placed inside of a single SoC (System on Chip) to increase overall protection and to protect specific parts of the chip against local FIs.

In many cases, glitch detectors are not needed all the time, since their main use is to protect security-related functionalities or parts of a device, such as during a secure boot phase, encryption, authentication, verification of access rights, access to secure memory and signature verification. Given that the delay function 101 of the glitch detector is typically the part that takes up the most area on a chip, a substantial area of the chip may be inactive when security-related functions are not being performed. This fact can be used to optimise how a glitch detector may be implemented on a device.

According to the present disclosure, the delay function 101 of a glitch detector can instead be provided at least in part by another function in a hardware accelerator in the chip that may be used for another purpose but which can be repurposed for providing a predictable delay function for the glitch detector. The function may for example be used in the chip for other parts of the system such as audio processing, video processing, machine learning, hashing of messages, encryption, accelerators for data compression or mathematical functions such as matrix multiplication. Functions that are available in hardware (HW) accelerators such as DSPs, GPUs and others may be used to replace at least part of the delay function 101. By sharing such functions with a glitch detector, the area occupied by the glitch detector on the chip can be reduced. The functions used for the glitch detector can be selected on the basis of which functions are required by the hardware accelerator while the chip performs security-related operations. If, for example, a particular function in a hardware accelerator is not required for a security-related operation, the function can be repurposed to provide a delay function for a glitch detector.

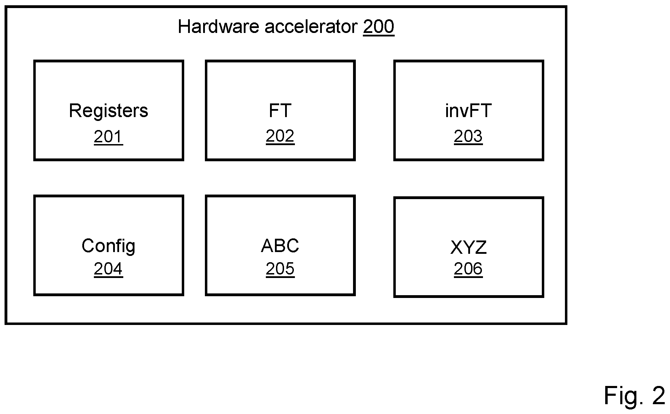

A typical HW accelerator 200, as illustrated schematically in Figure 2, can contain multiple useful hardware blocks 201-206. Each block, or computing module, is used to compute one specific function. For example, a particular HW accelerator 200 can contain a block 202 for computing a Fourier transform (FT), another block 203 for computing an inverse Fourier transform and other blocks 201, 204 performing register and configuration functions. Other functions in blocks 205, 206, arbitrarily termed ABC and XYZ in Figure 2, may also be implemented in the HW accelerator 200. Only some of the blocks 201-206 of a typical HW accelerator are used by the entire HW accelerator 200, for example block 204 to store its configuration. Other blocks are typically only used for computing a specific function and may therefore not be needed at all times.

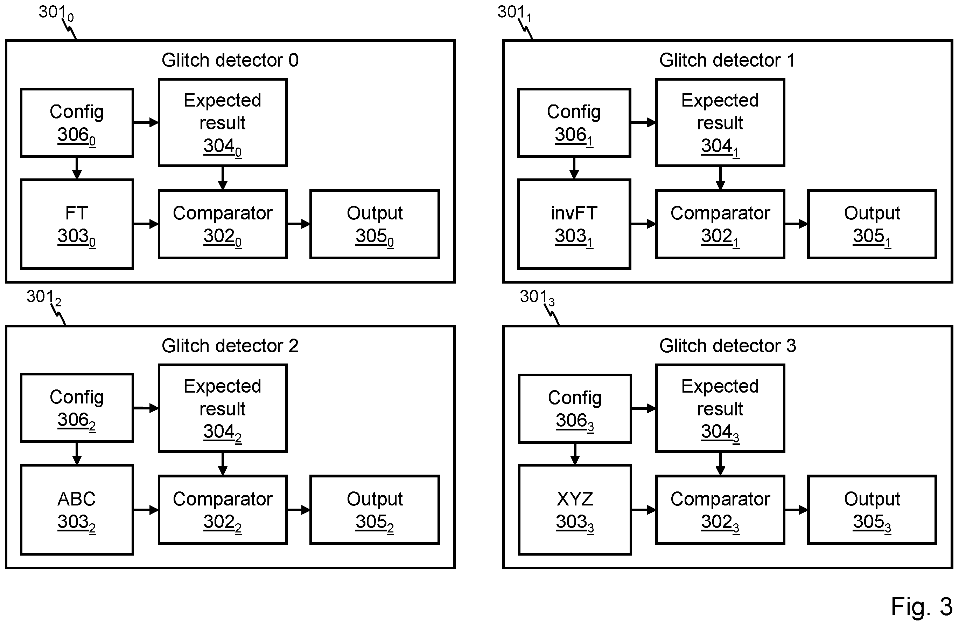

Each of the useful functions inside of a HW accelerator 200 that are not required during a security operation may also be used as a delay function for a glitch detector. Such functions may be referred to herein as *computing delay functions* as opposed to a simple *delay function* such as used in normal glitch detectors. Based on the example above, example glitch detectors 301₀₋₃ may be arranged instead according to the schematic representations in Figure 3. Each glitch detector 301₀₋₃ comprises a comparator 302₀₋₃ that compares an output from a delay function 303₀₋₃ with an expected result 304₀₋₃. An output 305₀₋₃ from the comparator 302₀₋₃ indicates whether a supply voltage glitch has been detected. Other types of glitch such as a clock glitch arising from a fault injection that attempts to manipulate the clock frequency may also be detected using this method. A configuration unit 306₀₋₃ in each glitch detector 301₀₋₃ provides inputs for the expected result 304₀₋₃ and the delay function 303₀₋₃.

For use in the glitch detectors 301₀₋₃, each of the functions 303₀₋₃ that can also act as a delay function can be configured by the respective configuration unit 306₀₋₃ to instead use a specific input having a known output (i.e. an expected computed result). The output from the respective function 303₀₋₃ can then be checked using the comparator 302₀₋₃ against the expected result 304₀₋₃ in the same way as in a conventional glitch detector.

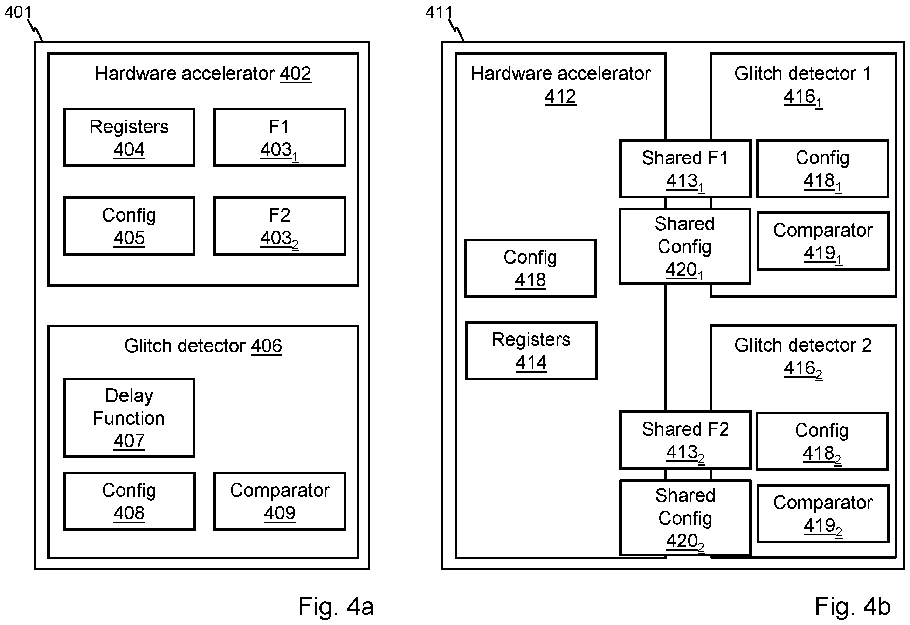

A comparison between a conventional arrangement of separate hardware accelerator and glitch detector with the arrangement involving shared functions is illustrated schematically in Figures 4a and 4b. An integrated circuit (IC) 401 with a conventional arrangement in Figure 4a comprises a hardware accelerator 402 including computing modules 403₁, 403₂, a register module 404 and a configuration unit 405. The IC 401 also includes a glitch detector 406, which includes a delay function 407, configuration unit 408 and comparator 409. The glitch detector 406 and hardware accelerator 402 are separate units on the IC 401, sharing only a common supply voltage. As described above, the delay function 407 of the glitch detector 406 occupies a substantial proportion of the total area required by the glitch detector 406, which is only required for use while a security operation is being performed by the IC 401.

An IC 411 according to the present disclosure includes a hardware accelerator 412 with a configuration unit 418, register module 414 and computing modules 413₁, 413₂, i.e. similar to the hardware accelerator 402 of the conventional IC 401. Each of the computing modules 413₁, 413₂ are in this case shared with a respective glitch detector 416₁, 416₂. Each glitch detector 416₁, 416₂ includes a configuration unit 418₁, 418₂ and comparator 419₁, 419₂. Each glitch detector 416₁, 416₂ may also include a shared configuration module 420₁, 420₂, which performs configuration functions that can be used by both the hardware accelerator 411 and glitch detectors 416₁, 416₂.

The functions F1 and F2 in computing modules 413₁, 413₂ may represent any function that can also be used to replicate a delay function that can be used by a glitch detector 416₁, 416₂. Such functions may for example include a Fourier transform, inverse Fourier transform or other functions. Other examples of functional modules that may be repurposed to replicate a delay function include cryptographic hardware accelerators to perform for example public key cryptography, symmetric key cryptography or hashing operations, DSP-related accelerators used in for example audio or image processing, and floating point units. The computing function used by the glitch detector to replicate, at least in part, the delay function may for example be one of a Fourier transform, an inverse Fourier transform, a cryptographic operation, a digital signal processing operation and a floating point operation. Other functions may also be used to replicate a delay function.

An advantage of adding glitch detector functionality on top of functions available in existing hardware accelerator is that the bulk of functionality required by the glitch detector is provided by the functions in the hardware accelerator 411, resulting in a reduced overhead for incorporating each additional glitch detector. Only the comparator 419₁, 419₂ and a set of configuration registers 418₁, 418₂ may need to be added for each glitch detector 416₁, 416₂.

An important aspect to delay functions is the presence of a critical path. A critical path is a longest path from the input to the output of a hardware block. The critical path has a direct influence on the clock speed that can be used in the device, placing a constraint on the maximum clock speed at which the device would be operational. If the clock starts running faster, information will not fully propagate on the critical path and the result will be incorrect. This fact may be used to implement a glitch detector.

To ensure that some critical path is used in the instances of the computing delay functions, special inputs may be chosen for the functions. The choice may be made in a way that forces the longest combinatorial path to be used in the computation. An unsuitable example would include multiplication by zero or addition with zero. A more suitable example would depend on the specific computation that is used. In general, non-trivial values should be used for the computation.

Moreover, instead of having a single input, depending on the function one might need to have at least two different inputs (with two corresponding expected outputs) that ensure the toggling of some internal registers to ensure that each cycle the state of the configuration is different. That might be needed to make sure a fault is detected. In a case when the same input is used each time, a fault might by ineffective on some parts of a circuit because some internal registers still contain a value from a previous computation (which was the exact same one in our case) and thus the final result would still be correct. Therefore, in some examples the glitch detector may alternate between two different inputs for the computing delay function. In a general aspect therefore, the glitch detector may be configured to provide a plurality of different inputs to the delay function provided by the computing function of the HW accelerator.

Not all functions of a HW accelerator are necessarily suited to be used in place of a typical delay function. If, for example, the HW accelerator is very small and its critical path is too short, then the function should not be used instead of a delay function. In general, the critical path of a delay function is required to be as long as possible given the current clock frequency. Ideally the critical path of the HW accelerator computing modules should exceed or be close to the one of the functions it tries to protect. The critical path is a design constraint which is checked in all steps of an IC design cycle. Determining whether a particular HW accelerator would be suitable can therefore be done during design of the IC.

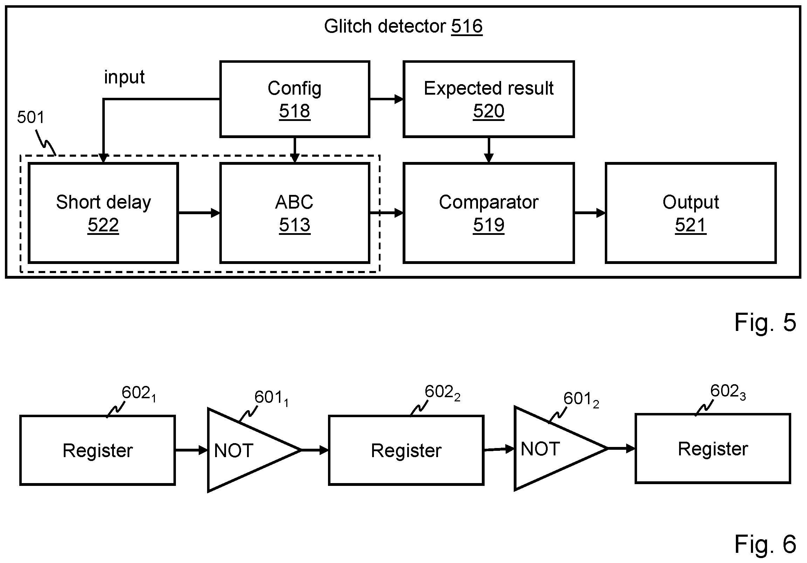

In some examples, a given function in a HW accelerator that has a shorter than required critical path can be appended with a small delay function to extend its critical path, as illustrated schematically in Figure 5. As in the example in Figure 4, the glitch detector 516 comprises a comparator 519 arranged to compare an output from a delay function 501 with an expected result 520 to provide an output 521 for detecting a glitch, for example a supply voltage or clock frequency glitch. In this example, the delay function 501 is provided in part by a computing module 513 in the HW accelerator (not shown in Figure 5) and in part by a further delay function 522 of the glitch detector 516. The configuration module 518 provides an input to the further delay function 522 in series with the computing module 513 so that the total critical path is sufficient to provide an output to the comparator 519 that can be used to detect a voltage glitch.

The short further delay function 522 that is used as an extension may for example be implemented using a series arrangement of a plurality of alternating logic NOT gates 601₁, 601₂ and registers 602₁, 602₂, 602₃, as illustrated schematically in Figure 6. A typical delay function will usually require a long chain of NOT gates, but in this case the chain can be made shorter due to part of the delay function being taken over by the computing module of the HW accelerator.

When a glitch detector is not required for use, for example when the device is not performing any secure operations, the computing delay function may be used as it was intended by the HW accelerator, i.e. to compute something useful for the device. In such a case, the glitch detector functionality can be disabled while a normal user input is submitted to the function to compute a useful result.

In some examples, if a HW accelerator has multiple functions that it can perform then at some point in time some of these functions can perform useful computations while others may be enabled for glitch detection as described above. In a general aspect therefore, where the HW accelerator comprises a plurality of computing modules, the delay function of a plurality of glitch detectors may be provided by a subset of the plurality of computing modules.

The apparatus and methods disclosed herein can be used to build glitch detectors by reusing some functionalities from other hardware blocks of a microcontroller or SoC (System on Chip). This approach allows for less hardware overall to be used in a chip design and reduces the cost of security, i.e. the cost associated with the use of glitch detectors, thereby enabling more glitch detectors to be used for the same overall IC area or a smaller overall IC area to be used for the same functionality.

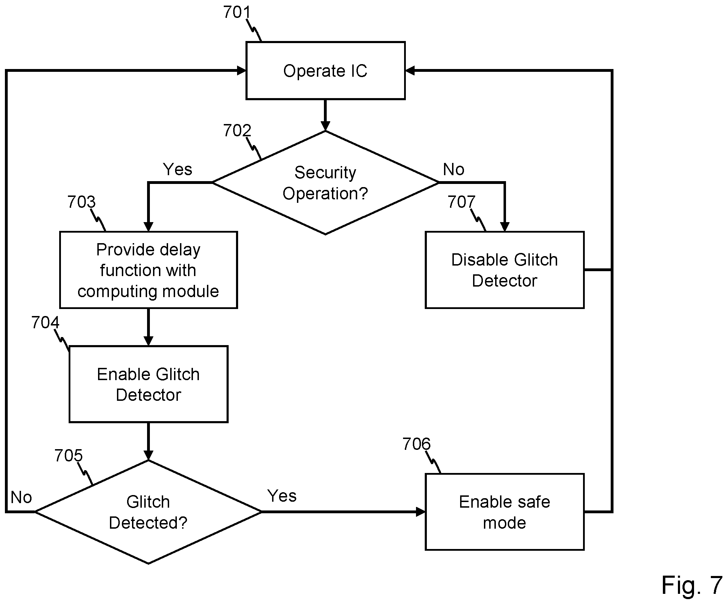

Figure 7 is a flow diagram illustrating an example method of operating an IC incorporating a glitch detector of the type described herein. In a first step 701, the IC is operated. If, at step 702, a security operation is being performed, at step 703 a delay function of the glitch detector is provided with a computing module of the hardware accelerator and at step 704 the glitch detector is enabled. If, at step 705, a glitch is detected, the IC may enter a safe mode at step 706, following which the IC continues operation. Otherwise, the IC continues operation as normal. If, at step 702, a security operation is not being performed, the glitch detector may be disabled at step 707 and the computing module of the hardware accelerator used for its usual purpose.

From reading the present disclosure, other variations and modifications will be apparent to the skilled person. Such variations and modifications may involve equivalent and other features which are already known in the art of glitch detectors, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. An integrated circuit (411) comprising:
a hardware accelerator (412) including a computing module (413₁, 413₂) configured to perform a computing function; and
a glitch detector (416₁, 416₂) including a delay function (413₁, 413₂) and a comparator (419₁, 419₂) arranged to compare an output from the delay function (413₁, 413₂) with an expected result to provide an output for detecting a glitch,
wherein the delay function (413₁, 413₂) of the glitch detector (416₁, 416₂) is provided at least in part by the computing function of the computing module (413₁, 413₂) in the hardware accelerator (412).

2. The integrated circuit (411) of claim 1, wherein the output from the delay function (413₁, 413₂) is a delay.

3. The integrated circuit (411) of claim 1, wherein the output from the delay function (413₁, 413₂) is a computed result.

4. The integrated circuit (411) of any preceding claim, wherein the computing function is one of a Fourier transform, an inverse Fourier transform, a cryptographic operation, a digital signal processing operation and a floating point operation.

5. The integrated circuit (411) of any preceding claim, wherein the glitch detector (416₁, 416₂) comprises a configuration module (418₁, 418₂, 420₁, 420₂), provided at least in part by the hardware accelerator (411).

6. The integrated circuit (411) of any preceding claim, wherein the glitch detector (416₁, 416₂) is configured to provide a plurality of different inputs to the delay function (413₁, 413₂).

7. The integrated circuit (411) of any preceding claim, wherein the glitch detector (516) comprises a further delay function (522), the glitch detector (516) configured to provide an input to the further delay function (522) in series with the computing module (513) to provide the output from the delay function (413₁, 413₂) to the comparator (519).

8. The integrated circuit (411) of claim 7, wherein the further delay function (522) comprises a series arrangement of a plurality of alternating logic NOT gates (601₁, 601₂) and registers (602₁, 602₂, 602₃).

9. The integrated circuit (411) of any preceding claim, wherein the computing module is one of a plurality of computing modules (413₁, 413₂) and the glitch detector is one of a plurality of glitch detectors (416₁, 416₂), the delay function of each glitch detector being provided at least in part by a respective one of the computing modules (413₁, 413₂) of the hardware accelerator (412).

10. A method of performing glitch detection in an integrated circuit (411), the integrated circuit (411) comprising:
a hardware accelerator (412) including a computing module (413₁, 413₂) configured to perform a computing function; and
a glitch detector (416₁, 416₂) including a delay function (413₁, 413₂) and a comparator (419₁, 419₂) arranged to compare an output from the delay function (413₁, 413₂) with an expected result to provide an output for detecting a glitch,
the method comprising:
while the integrated circuit (411) is performing a security operation, operating the glitch detector (416₁, 416₂) with the delay function (413₁, 413₂) of the glitch detector (416₁, 416₂) being provided at least in part by the computing module (413₁, 413₂) of the hardware accelerator (412).

11. The method of claim 10, wherein the output of the comparator (419₁, 419₂) indicates detection of a supply voltage or clock frequency glitch if the output from the delay function (420₁, 420₂) does not match the expected result.

12. The method of claim 10 or claim 11, wherein the output from the delay function (420₁, 420₂) is a delay.

13. The method of claim 10 or claim 11, wherein the output from the delay function (420₁, 420₂) is a computed result.

14. The method of any one of claims 10 to 13, wherein the security operation is one or more of a secure boot phase, an encryption operation, an authentication operation, an operation for verification of access rights, an operation to access secure memory and a signature verification operation.

15. The method of any one of claims 10 to 14, comprising disabling the glitch detector (416₁, 416₂) while the integrated circuit (411) is not performing a security operation.
